# EUROPÄISCHE PATENTSCHRIFT

(11) **EP 1 497 378 B1**
(45) Veröffentlichungstag und Bekanntmachung des Hinweises auf die Patenterteilung: **22.03.2006**
(21) Anmeldenummer: 03714832.7
(22) Anmeldetag: 17.03.2003
(51) Int. Cl.: C09B 67/04, C09B 67/28

(54) **VERFAHREN ZUR HERSTELLUNG VON VERKÜPBAREN ORGANISCHEN PIGMENTEN**
METHOD FOR PRODUCING VATTABLE ORGANIC PIGMENTS
PROCEDE DE PRODUCTION DE PIGMENTS ORGANIQUES CUVABLES

(30) Priorität: 16.04.2002 DE 10216681
(43) Veröffentlichungstag der Anmeldung: 19.01.2005
(73) Patentinhaber: Clariant Produkte (Deutschland) GmbH, 65929 Frankfurt am Main (DE)
(72) Erfinder: WEBER, Joachim, 65929 Frankfurt am Main (DE); URBAN, Manfred, 65205 Wiesbaden (DE); DIETZ, Erwin, 61462 Königstein (DE)
(86) Internationale Anmeldenummer: PCT/EP2003/002730
(87) Internationale Veröffentlichungsnummer: WO 2003/087231

(56) Entgegenhaltungen:
- EP-A- 1 130 062
- DE-A- 2 727 484
- DE-B- 2 803 362
- DE-B- 2 854 190

## Beschreibung

Die vorliegende Erfindung betrifft ein neues Verfahren zur Feinverteilung von organischen Pigmenten.

Manche organische Pigmente fallen bei ihrer Synthese als grobkristalline Rohpigmente an. Um sie in eine anwendungstechnisch brauchbare Form zu bringen, müssen die Teilchen zerkleinert werden. In der Literatur sind hierfür verschiedene Verfahren bekannt.

Die DE-2 727 484 offenbart ein Verfahren zur Feinverteilung von Perylen-3,4,9,1 0-tetracarbonsäure-N,N'-bismethylimid durch Umküpen.

Die DE-2 803 362 offenbart ein Verfahren zur Feinverteilung speziell für die beiden Pigmente Perylen-3,4,9,10-tetracarbonsäure-bis-p-phenetidid und -bis-p-chloranilid durch Oxidation der Leukoform in Gegenwart von oberflächenaktiven Mitteln oder Einwirkung von Scherkräften. Scherkräfte werden von damals üblichen Dispergiermühlen erzeugt.

Die DE-2 854190 offenbart ein Verfahren durch Oxidation der Leukoverbindung von Indanthronpigmenten unter gleichzeitiger Einwirkung von Scherkräften. Dabei wird die Anwesenheit von oberflächenaktiven Mitteln gefordert. Die Scherkräfte werden von damals üblichen Dispergiermühlen erzeugt.

In der EP-176 899 wird als Feinverteilungsverfahren eine übliche Salzschwingmahlung eingesetzt. Die großen Mengen eingesetzter Salze belasten das Abwasser.

Die EP-213 281 beschreibt ein Verfahren zur Feinverteilung von Pigmenten der Anthanthronreihe durch Umküpung mit anschließendem Lösemittelfinish. Es handelt sich um ein zweistufiges Verfahren für eine einzelne Pigmentklasse. Der Einsatz eines Lösemittels erfordert eine technisch anspruchsvolle Apparatur zum Wiedergewinnen des Lösemittels.

Die EP-678 559 offenbart ein Feinverteilungsverfahren für organische Pigmente, bei dem die Pigmente zunächst einer Trockenmahlung unterworfen werden und die dabei erhaltenen Präpigmente in wässriger Suspension in einer Rührwerkskugelmühle mit hoher Leistungsdichte nassvermahlen werden. Das zweistufige Verfahren erfordert lange Prozesszeiten. Eine trockene Mahlung ist mit erheblicher Staubentwicklung verbunden, die bezüglich Arbeitshygiene problematisch ist.

Die EP-702 060 offenbart ein Verfahren zur Herstellung von 4,10-Dibromanthanthronpigmenten unter Einsatz einer Rührwerkskugelmühle mit hoher Leistungsdichte.

Die EP-979 846 offenbart ein Verfahren zur Herstellung von N,N'-Dimethyl-perylen-3,4,9,10-tetracarbonsäurediimid unter Einsatz einer Rührwerkskugelmühle mit hoher Leistungsdichte und Verwendung von ein oder mehreren Zusatzstoffen aus der Gruppe der Pigmentdispergatoren und Tenside.

Die DE-100 05 186 offenbart ein Verfahren zur Herstellung von Perylen-3,4,9,10-tetracarbonsäurediimid unter Einsatz einer Rührwerkskugelmühle mit hoher Leistungsdichte.

Bei der Verwendung von Pigmenten zum Färben von hochmolekularen organischen Materialen werden hohe Anforderungen an die anwendungstechnischen Eigenschaften der Pigmente gestellt, wie hohe Farbstärke, im Falle vom Einsatz in Lacksystemen einwandfreie Überlackierechtheiten, hoher Glanz, niedrige Viskosität der hochpigmentierten Lackkonzentrate (millbase) und insbesondere im Falle von Metalliclackierungen hohe Transparenz und brillante Farbtöne. Auch sollen sie möglichst universell in den verschiedenen Lacksystemen einsetzbar sein. Im Falle von Einfärbung von Kunststoffen wird neben der Coloristik und den Echtheitseigenschaften wie Ausblutechtheit besonders eine gute Dispergierbarkeit verlangt.

Die in den obengenannten Schriften offenbarten Verfahren sind teils nur für spezielle Pigmente gedacht, teils sind sie mit Nachteilen wie Mehrstufigkeit, lange Prozesszeiten, Einsatz eines Lösemittels oder großer Mengen Salz behaftet, was sich in erhöhten Kosten niederschlägt.

Es bestand ein Verbesserungsbedarf und daher die Aufgabe, ein im Vergleich zum Stand der Technik verbessertes und kostengünstigeres Verfahren zur Feinverteilung von verküpbaren organischen Pigmenten zu finden, dessen Einsatz nicht auf ein spezielles Pigment beschränkt ist, und welches Pigmente zur Verfügung stellt, die den Anforderungen an die anwendungstechnischen Eigenschaften genügen.

Es wurde gefunden, dass die Aufgabe überraschenderweise durch Kombination einer Verküpung mit einer Nassmahlung mit einer Rührwerkskugelmühle hoher Energiedichte gelöst wird.

Gegenstand der Erfindung ist ein Verfahren zur Herstellung von verküpbaren organischen Pigmenten, dadurch gekennzeichnet, dass eine wässrige oder wässrig-organische Suspension eines grobkristallinen Rohpigments verküpt und wieder oxidiert wird, und die Pigmentsuspension während der Verküpung und/oder während der Oxidation mittels einer Rührwerkskugelmühle, die mit einer Leistungsdichte von mehr als 1,0 kW, insbesondere mehr als 1,5 kW, pro Liter Mahlraum und einer Rührwerksumfanggeschwindigkeit von mehr als 12 m/s betrieben wird, unter Einwirkung von Mahlkörpern vom Durchmesser gleich oder kleiner als 0,9 mm gemahlen wird.

Unter Verküpung wird üblicherweise eine Reduktion des Farbmittels verstanden, wobei das reduzierte Farbmittel meist anders gefärbt ist als das nicht reduzierte, ursprüngliche Farbmittel.

Das erfindungsgemäße Verfahren betrifft alle organischen Pigmente, die sich verküpen lassen, beispielsweise Indanthrone, wie C.I. Pigment Blue 60; Anthanthrone, wie C.I. Pigment Red 168; Thioindigo, wie C.I. Pigment Red 88, 181, C.I. Vat Red 41 und C.I. Pigment Blue 66; Perinone, wie C.I. Pigment Orange 43, C.I. Pigment Red 194 und C.I. Vat Red 14; oder Perylene, wie C.I. Pigment Red 123, 149, 178, 179 und 189, C.I. Pigment Violet 29 und C.I. Pigment Black 31 und 32, sowie Mischungen oder Mischkristalle davon.

Die Verküpung der grobkristallinen Rohpigmente erfolgt in wässrig-alkalischer Suspension mit einem Reduktionsmittel, wie Alkalimetallhydrogensulfit, -dithionit, -hydroxymethansulfinat oder Borhydriden. Bevorzugt ist Natrium- oder Kaliumdithionit.

Die optimale Pigmentkonzentration in der Suspension ist abhängig von der Teilchengröße und -form des Pigments sowie von der Rheologie der Suspension. Sie kann 2,5 bis 40 Gew.-% betragen, bevorzugt 5 bis 25 Gew.-%, insbesondere 7,5 bis 20 Gew.-%, bezogen auf das Gesamtgewicht der Suspension.

Die Menge an Reduktionsmittel kann bis zu dem 5-fachen der stöchiometrisch für die Verküpung erforderlichen Menge betragen, vorzugsweise wird jedoch nur das 0,1- bis 2-fache der erforderlichen Menge eingesetzt.

Zur Herstellung des wässrig-alkalischen Mediums verwendet man vorzugsweise wässrige Lösungen von Alkalimetallhydroxiden, vorzugsweise Natron- und Kalilauge.

Das Alkali sollte stöchiometrisch zu der Menge an Reduktionsmittel eingesetzt werden, es kann aber auch ein bis zu 5-facher Überschuss bezüglich des Reduktionsmittels eingesetzt werden.

Zur Reoxidation wird ein Oxidationsmittel in mindestens stöchiometrischer Menge, bezogen auf Reduktionsmittel eingesetzt, es kann bis zu der 5-fach stöchiometrischen Menge betragen. Als Oxidationsmittel werden beispielsweise Wasserstoffperoxid und dessen Addukte, wie Natriumperborat; Luft; oxidierend wirkende Salze, wie Nitrate, Chlorate oder Hypochlorite, besonders alkalische Hypochloritlösung; oxidierend wirkende Säuren, wie Salpetersäure; oder Nitroverbindungen, wie 3-Nitrobenzolsulfonsäure; eingesetzt.

Die Mahlung findet zu einem beliebigen Zeitpunkt statt mit der Maßgabe, dass sie einen Zeitraum zwischen Beginn der Reduktion und dem Ende der Oxidation betrifft. So kann beispielsweise bei laufender Mahlung das Reduktionsmittel zugegeben werden, oder die Mahlung kann sich an die Reduktion anschließen. Die Mahlung kann auch während der Zugabe des Oxidationsmittels geschehen und gegebenenfalls nach vollständiger Oxidation bis zum Erzielen der gewünschten Feinheit weiterlaufen, oder die Mahlung läuft sowohl während der Reduktion als auch während der Oxidation. Dabei kann die Leukoverbindung sowohl in Form ihres Salzes als auch in Form ihrer Säure, die durch Zugabe anorganischer oder organischer Säuren nach der Reduktion abgeschieden werden kann, gemahlen werden. Als Säuren zum Abscheiden der Leukoform kommen organische Säuren, wie z.B. aliphatische oder aromatische Carbon- oder Sulfonsäuren, wie beispielsweise Ameisensäure, Essigsäure, Trichloressigsäure, Propionsäure, Buttersäure, Hexansäure, Oxalsäure, Citronensäure, Benzoesäure, Phenylessigsäure, Benzolsulfonsäure oder p-Toluolsulfonsäure, und anorganische Säuren, wie z.B. Salzsäure, Schwefelsäure oder Phosphorsäure, in Betracht.

Für die im erfindungsgemäßen Verfahren durchgeführte Mahlung sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise, und die mit einer spezifischen Leistungsdichte von über 1,0 kW, insbesondere von über 1,5 kW, pro Liter Mahlraum betrieben werden können, wobei deren Rührwerksumfangsgeschwindigkeit über 12 m/s beträgt. Dafür geeignete Mühlen sind beispielsweise in der DE-PS-3 716 587 beschrieben. Ist die Mahlintensität der Mühle geringer, so werden die guten erfindungsgemäßen Eigenschaften, insbesondere die hervorragende Coloristik, wie hohe Transparenz und Farbstärke, und die gute Dispergierbarkeit der Pigmente nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muss durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen, und die Wärme wird überwiegend über das Mahlgut nach außen abgeführt. Als Mahlkörper dienen Kugeln aus Zirkonoxid, Zirkonmischoxid, Aluminiumoxid oder Quarz vom Durchmesser gleich oder kleiner als 0,9 mm; zweckmäßig werden solche mit einem Durchmesser von 0,2 bis 0,9 mm, vorzugsweise 0,3 bis 0,5 mm, verwendet.
Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so dass die Trennvorrichtungen von den Mahlkörpern praktisch nicht berührt werden, wodurch Verstopfungen derselben weitgehend verhindert werden. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Die Mahldauer ist abhängig von den Feinheitsanforderungen und den Anforderungen an die anwendungstechnischen Eigenschaften für das jeweilige Anwendungsgebiet. Deshalb liegt die Verweilzeit des Mahlguts in der Rührwerkskugelmühle im allgemeinen zwischen 3 und 60 Minuten. Sie beläuft sich normalerweise auf eine Dauer von 4 und 45 Minuten, vorzugsweise 5 bis 30 Minuten.

Die Mahlung, die Verküpung und die Reoxidation werden vorteilhaft bei Temperaturen im Bereich von 0 bis 100°C, zweckmäßig bei einer Temperatur zwischen 10 und 60°C, vorzugsweise bei 20 bis 50°C, durchgeführt.

Das flüssige Medium im erfindungsgemäßen Verfahren ist zweckmäßigerweise Wasser. Es kann jedoch auch ein wässrig-organisches Medium eingesetzt werden. Als organische Lösemittel kommen Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylen- oder Polypropylenglykole; Ether, wie Methylisobutylether, Tetrahydrofuran, Dimethoxyethan oder Dioxan; Glykolether, wie Monomethyl- oder Monoethylether des Ethylen- oder Propylenglykols, Diethylenglykol-monomethylether, Diethylenglykol-monoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆₋glykolester; oder Glykoletheracetate, wie 1-Methoxy-2-propylacetat; oder Phthalsäure- oder Benzosäure-C₁-C₆-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Morpholin, Picolin oder Chinolin; sowie Hexamethylphosphorsäuretriamid, 1,3-Dimetyl-2-imidazolidinon, Dimethylsulfoxid und Sulfolan in Betracht.
Besonders bevorzugt sind Wasser und Mischungen aus C₁-C₆-Alkoholen, N-Methyl-pyrrolidon, Nitrobenzol und/oder Toluol mit Wasser.
Bei der Auswahl der Lösemittel ist darauf zu achten, dass sie unter den gewählten Bedingungen stabil sind.

Nach vollständiger Oxidation und Abschluß der Mahlung werden die Pigmente in üblicher Weise durch Filtration isoliert. Vor einer Isolation eines Pigments kann ein gegebenenfalls eingesetztes Lösemittel destillativ, gegebenenfalls unter reduziertem Druck, oder auch durch Wasserdampfdestillation entfernt werden.
Die nach dem erfindungsgemäßen Verfahren hergestellten Pigmente können als vorzugsweise wässrige Presskuchen zum Einsatz kommen, in der Regel handelt es sich jedoch um feste Systeme von rieselfähiger, pulverförmiger Beschaffenheit oder um Granulate.

Zur Verbesserung der coloristischen Eigenschaften und zur Erzielung bestimmter anwendungstechnischer Effekte können Hilfsmittel wie beispielsweise Tenside, pigmentäre und nichtpigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon eingesetzt werden.
Die Zugabe von Hilfsmitteln kann zu einem beliebigen Zeitpunkt vor, während oder nach der Reduktion, Oxidation oder Isolierung erfolgen, auf einmal oder in mehreren Portionen.
Die Gesamtmenge der zugegebenen Hilfsmittel kann 0 bis 40 Gew.-%, bevorzugt 1 bis 30 Gew.-%, besonders bevorzugt 2,5 bis 25 Gew.-%, bezogen auf das Pigment, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Mahlung, Reduktion und Oxidation nicht schäumen.
Als anionaktive Substanzen kommen beispielsweise Fettsäuretauride, FettsäureN-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.
Als kationaktive Substanzen kommen beispielsweise quatemäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Block-Copolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse®, Avecia; Disperbyk®, Byk, Efka®, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estem, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfonsäure-, Sulfonamid- oder Sulfonsäureestergruppenhaltige Pigmentdispergatoren, Ether- oder Thioethergruppen haltige Pigmentdispergatoren, oder Carbonsäure-, Carbonsäureester- oder Carbonamidgruppenhaltige Pigmentdispergatoren.

Es ist auch möglich, einen Finish, gegebenenfalls unter Einsatz organischer Lösemittel, bei erhöhter Temperatur an die Mahlung anzuschließen.

Es war überraschend, dass bei der erfindungsgemäßen Kombination von Verküpung und Mahlung bei gleicher Mahldauer deutlich größere Effekte, wie z.B. höhere Transparenz, erzielt werden. Dadurch ist es auch möglich, die Mahldauer zu verringern. Für die Herstellung der Pigmente ist im erfindungsgemäßen Verfahren der Einsatz von Lösemitteln oder Hilfsmitteln nicht zwingend erforderlich. Der Anfall von Salz kann gegenüber dem Stand der Technik deutlich reduziert werden.

Die erfindungsgemäßen Pigmente zeichnen sich beim Färben von hochmolekularen organischen Materialien durch hervorragende anwendungstechnische Eigenschaften aus, insbesondere durch eine hervorragende Rheologie, gute Dispergierbarkeit, hohe Transparenz, gutes Glanzverhalten, hohe Farbstärke, einwandfreie Ausblut- und Überlackierechtheiten sowie sehr gute Licht- und Wetterechtheit.

Die nach dem erfindungsgemäßen Verfahren hergestellten Pigmente lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonem und Entwicklern, sowie von Tinten und Druckfarben.

Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blend oder in Form von Präparationen oder Dispersionen zu benutzen. Bezogen auf das zu pigmentierende, hochmolekulare organische Material setzt man die erfindungsgemäßen Pigmente in einer Menge von 0,05 bis 30 Gew.-%, vorzugsweise 0,1 bis 15 Gew.-% ein.

Die erfindungsgemäß hergestellten Pigmente sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäße hergestellten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente als Farbmittel in Ink-Jet Tinten auf wässriger und nichtwässriger Basis sowie in solchen Tinten, die nach dem hot-melt-Verfahren arbeiten, geeignet.

Weiterhin sind die erfindungsgemäß hergestellten Pigmente auch als Farbmittel für Farbfilter sowohl für die additive wie subtraktive Farberzeugung geeignet.

Zur Beurteilung der Eigenschaften der Pigmente auf dem Kunststoffgebiet wurde aus der Vielzahl der bekannten Kunststoffe Weichpolyvinylchlorid (PVC) ausgewählt. Die Bestimmung der Ausblutechtheit erfolgte nach DIN 53775.

Zur Beurteilung der Eigenschaften der Pigmente auf dem Lacksektor wurden aus der Vielzahl der bekannten Lacke ein Alkyd-Melaminharz-Lack auf Basis eines mittelöligen Alkydharzes und eines butanolveretherten Melaminharzes (AM) sowie ein High-Solid-Acrylharzeinbrennlack auf Basis einer nichtwässrigen Dispersion (HS) ausgewählt.

Die Bestimmung der Farbstärke und des Farbtons erfolgte nach DIN 55986.
Die Rheologie des Mahlguts nach der Dispergierung (millbase-Rheologie) wurde visuell anhand der folgenden fünfstufigen Skala bewertet.
5 dünnflüssig
4 flüssig
3 dickflüssig
2 leicht gestockt
1 gestockt
Die Bestimmung der Überlackierechtheit erfolgte nach DIN 53221.
Die Bestimmung der Viskosität erfolgte nach dem Verdünnen des Mahlguts auf die Pigmentendkonzentration mit dem Viskospatel nach Rossmann, Typ 301 der Firma Erichsen.

In den nachfolgenden Beispielen bedeuten Teile jeweils Gewichtsteile und Prozente jeweils Gewichtsprozente.

### Beispiel 1

10 Teile rohes Perylentetracarbonsäure-bis-p-phenetidid (P.R.123, C.I. No. 71145), hergestellt nach DE-1 113 773 Beispiel 1, werden in 74 Teilen Wasser suspendiert. Nach Zugabe von 8 Teilen Natriumhydroxid 100 %ig, 8 Teilen Natriumdithionit 100 %ig und 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 10 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt. Die Suspension wird auf 60°C erwärmt. Es werden 28,6 Teile Perhydrol 35%ig zugegeben, auf 80°C erwärmt und 2 h bei 80°C gerührt. Dann wird abgesaugt, mit Wasser gewaschen und bei 80°C getrocknet. Man erhält ca. 9 Teile Pigment, das in Kunststoff (PVC) transparente und farbstarke Färbungen von guter Dispergierbarkeit (stippenfrei) und mit einwandfreier Ausblutechtheit liefert.

### Beispiel 2

Es wird verfahren wie in Beispiel 1 mit dem einzigen Unterschied, dass an Stelle der 28,6 Teile Perhydrol 35%ig 90 Teile Perhydrol 35%ig eingesetzt werden. Man erhält ca. 9 Teile Pigment, das in Kunststoff (PVC) transparente und farbstarke Färbungen von guter Dispergierbarkeit (stippenfrei) und mit einwandfreier Ausblutechtheit liefert.

### Beispiel 3a, Vergleichsbeispiel (Trockenmahlung mit Salz, ohne Verküpung)

In einem Kunststoffbehälter, der mit 1400 Teilen Steatitzylindern vom Durchmesser 12 mm und der Länge 12 mm als Mahlkörper zu 80 Vol.-% gefüllt ist, werden 30 Teile rohes Perylentetracarbonsäure-bis-p-phenetidid, hergestellt nach DE-1 113 773 Beispiel 1, und 90 Teile Natriumsulfat eingefüllt. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein gemahlen. Das Mahlgut wird von den Mahlkörpern durch Sieben getrennt, in 2000 Teile Wasser eingetragen. Mit Natronlauge 33 %ig wird pH 11,5 gestellt, dann wird 2 Stunden bei 80°C gerührt, abgesaugt, salzfrei gewaschen und bei 80°C getrocknet.
Man erhält 25,6 Teile Pigment. Die Färbungen in Kunststoff (PVC) sind verglichen mit denen aus Beispiel 2 deutlich deckender und wesentlich dunkler.

### Beispiel 3b, Vergleichsbeispiel (erfindungsgemäße Mahlung, ohne Verküpung)

10 Teile rohes Perylentetracarbonsäure-bis-p-phenetidid (P.R. 123, C.I.
No. 71145), hergestellt nach DE-1 113 773 Beispiel 1, werden in 96 Teilen Wasser suspendiert. Nach Zugabe von 4 Teilen Natriumhydroxid 100 %ig und 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 10 Minuten lang mit einer Umfangsgeschwindigkeit von 15,7 m/s und einer Leistungsdichte von 3,1 kW/I Mahlraum bei 20°C gemahlen. Danach werden die Mahlkörper durch Sieben vom Mahlgut abgetrennt. Die Suspension wird abgesaugt, das Pigment mit Wasser gewaschen und bei 80°C getrocknet.
Man erhält ca. 9,5 Teile Pigment, das in Kunststoff (PVC) im Vergleich zu den Färbungen aus Beispiel 1 wesentlich deckendere, dunklere und blauere Färbungen liefert.

### Beispiel 4

10 Teile grobkristallines 4,10-Dibromanthanthron-Rohpigment (P.R. 168, C.I. No. 59300), hergestellt gemäß Fiat Final Report 1313 Vol II, werden in 90 Teilen Wasser suspendiert. Nach Zugabe von 8 Teilen Natriumhydroxid 100 %ig, 9,3 Teilen Natriumdithionit 86 %ig und 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 10 Minuten lang mit einer Umfangsgeschwindigkeit von 15,7 m/s und einer Leistungsdichte von 3,1 kW/I Mahlraum bei 20°C gemahlen. Danach werden die Mahlkörper durch Sieben vom Mahlgut abgetrennt. Zur Suspension werden bei Raumtemperatur 90,8 Teile Perhydrol 35 %ig zugegeben und 1 h gerührt. Dann wird abgesaugt, mit Wasser gewaschen und bei 80°C getrocknet.

Man erhält 6,1 Teile Pigment, das im AM-Lack transparente und farbstarke Lackierungen mit gelbstichig-rotem Farbton liefert. Die Glanzmessung ergibt den Wert 77, die Viskosität beträgt 5,1 s.

### Beispiel 5, Vergleichsbeispiel (erfindungsgemäße Mahlung, ohne Verküpung)

Es wird verfahren wie in Beispiel 4 mit dem Unterschied, dass kein Natriumdithionit zugegeben wird, sondern mit Natriumhydroxid 33%ig pH 12 gestellt wird.
Man erhält 9,3 Teile Pigment, das im AM-Lack verglichen mit dem Pigment, hergestellt gemäß Beispiel 4, bedeutend deckendere und deutlich blauere Lackierungen liefert, die Glanzmessung ergibt einen niedrigeren Wert von 54, und die Viskosität ist höher und beträgt 6,6 s.

### Beispiel 6a, Vergleichsbeispiel (erfindungsgemäße Mahlung, keine Verküpung)

10 Teile handelsübliches, grobkristallines Indanthron-Rohpigment (P.B. 60, C.I. No. 69800, hergestellt beispielsweise nach BIOS 987, 4, 52/4; FIAT 1313, 2, 73), werden in 90 Teilen Wasser suspendiert. Mit Natronlauge 33 %ig wird pH 12 gestellt. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 10 Minuten lang mit einer Umfangsgeschwindigkeit von 15,7 m/s und einer Leistungsdichte von 3,1 kW/I Mahlraum bei 20°C gemahlen. Danach werden die Mahlkörper durch Sieben vom Mahlgut abgetrennt, das Pigment wird abgesaugt, mit Wasser gewaschen und bei 80°C getrocknet. Man erhält 9,2 Teile Pigment.

### Beispiel 6b

10 Teile des ebenfalls in Beispiel 6a verwendeten Indanthron-Rohpigments werden in 74 Teilen Wasser suspendiert. Nach Zugabe von 8 Teilen Natriumhydroxid 100 %ig, 9,3 Teilen Natriumdithionit 86 %ig und 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 10 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt. Dann werden bei Raumtemperatur 90 Teile Perhydrol 35 %ig zugegeben und 1 h gerührt. Dann wird abgesaugt, mit Wasser gewaschen und bei 80°C getrocknet. Man erhält 9 Teile Pigment, das im HS-Lack transparente und farbstarke Lackierungen mit rotstichigem Farbton liefert. Die Metalliclackierung ist brillant und rotstichig. Verglichen mit der Lackierung des nach Beispiel 6a hergestellten Pigments ist die Volltonlackierung merklich transparenter, die Aufhellung merklich farbstärker und bedeutend rotstichiger, und die Metalliclackierung ebenfalls bedeutend rotstichiger.

### Beispiel 7

10 Teile eines grobkristallinen Perylen-Rohpigments P.R.149, C.I. No. 71137, hergestellt gemäß DE-A-1 067 157, werden in 74 Teilen wässrigem tert.-Amylalkohol 20 %ig suspendiert. Nach Zugabe von 8 Teilen Natriumhydroxid 100 %ig, 9,3 Teilen Natriumdithionit 86 %ig und 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 30 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt. Die Suspension wird auf 60°C erwärmt, dann werden 90 Teile Perhydrol 35 %ig zugegeben, auf 80°C erwärmt und 2 h gerührt bei 80°C gerührt. Der Amylalkohol wird durch Wasserdampfdestillation entfernt, das Pigment wird abgesaugt, mit Wasser gewaschen und bei 80°C getrocknet.
Man erhält ca. 9 Teile Pigment, das in Kunststoff (PVC) transparente und farbstarke Färbungen von guter Dispergierbarkeit (stippenfrei) und mit einwandfreier Ausblutechtheit liefert.

## Patentansprüche

1. Verfahren zur Herstellung von verküpbaren organischen Pigmenten, **dadurch gekennzeichnet, dass** eine wässrige oder wässrig-organische Suspension eines grobkristallinen Rohpigments verküpt und wieder oxidiert wird, und die Pigmentsuspension während der Verküpung und/oder während der Oxidation mittels einer Rührwerkskugelmühle, die mit einer Leistungsdichte von mehr als 1,0 KW pro Liter Mahlraum und einer Rührwerksumfanggeschwindigkeit von mehr als 12 m/s betrieben wird, unter Einwirkung von Mahlkörpern vom Durchmesser gleich oder kleiner als 0,9 mm gemahlen wird.

2. Verfahren nach Anspruch 1, **dadurch gekennzeichnet, dass** die verküpbaren organischen Pigmente Indanthron-, Anthanthron-, Thioindigo-, Perinon- oder Perylen-Pigmente sind.

3. Verfahren nach Anspruch 1 oder 2, **dadurch gekennzeichnet, dass** das verküpbare organische Pigment C.I. Pigment Blue 60, 66, C.I. Pigment Red 88, 168, 123, 149, 178, 179, 181, 189, 194, C.I. Vat Red 14, 41, C.I. Pigment Orange 43, C.I. Pigment Violet 29, C.I. Pigment Black 31 oder 32, oder eine Mischung oder ein Mischkristall davon ist.

4. Verfahren nach mindestens einem der Ansprüche 1 bis 3, **dadurch gekennzeichnet, dass** die Verküpung mit Natrium- oder Kaliumdithionit erfolgt.

5. Verfahren nach mindestens einem der Ansprüche 1 bis 4, **dadurch gekennzeichnet, dass** die Pigmentkonzentration in der Suspension 2,5 bis 40 Gew.-%, bezogen auf das Gesamtgewicht der Suspension, beträgt.

6. Verfahren nach mindestens einem der Ansprüche 1 bis 5, **dadurch gekennzeichnet, dass** die Mahldauer zwischen 3 und 60 Minuten beträgt.

7. Verfahren nach mindestens einem der Ansprüche 1 bis 6, **dadurch gekennzeichnet, dass** Verküpung, Oxidation und Mahlung bei einer Temperatur zwischen 0 und 100°C durchgeführt werden.

8. Verfahren nach mindestens einem der Ansprüche 1 bis 7, **dadurch gekennzeichnet, dass** die Suspension Wasser oder eine Mischung aus C₁-C₆₋Alkoholen, N-Methyl-pyrrolidon, Toluol und/oder Nitrobenzol mit Wasser enthält.

9. Verfahren nach mindestens einem der Ansprüche 1 bis 8, **dadurch gekennzeichnet, dass** Hilfsmittel aus der Gruppe der Tenside, pigmentären und nichtpigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon eingesetzt werden.

10. Verfahren nach mindestens einem der Ansprüche 1 bis 9, **dadurch gekennzeichnet, dass** die bei der Verküpung entstehende Leukoverbindung in Form ihres Salzes oder in Form ihrer Säure gemahlen wird.

## Claims

1. A method of producing vattable organic pigments which comprises vatting an aqueous or aqueous-organic suspension of a coarsely crystalline crude pigment and reoxidizing it, the pigment suspension being milled during vatting and/or oxidation by means of a stirred ball mill which is operated with a power density of more than 1.0 kW per liter of milling space and with a peripheral stirrer speed of more than 12 m/s, under the action of grinding media with a diameter of less than or equal to 0.9 mm.

2. The method as claimed in claim 1, wherein the vattable organic pigments are indanthrone, anthanthrone, thioindigo, perinone or perylene pigments.

3. The method as claimed in claim 1 or 2, wherein the vattable organic pigment is C.I. Pigment Blue 60, 66, C.I. Pigment Red 88, 168, 123, 149, 178, 179, 181, 189, 194, C.I. Vat Red 14, 41, C.I. Pigment Orange 43, C.I. Pigment Violet 29, C.I. Pigment Black 31 or 32, or a mixture or a mixed crystal thereof.

4. The method as claimed in at least one of claims 1 to 3, wherein the vatting takes place with sodium dithionite or potassium dithionite.

5. The method as claimed in at least one of claims 1 to 4, wherein the pigment concentration in the suspension is from 2.5% to 40% by weight, based on the total weight of the suspension.

6. The method as claimed in at least one of claims 1 to 5, wherein the milling duration is between 3 and 60 minutes.

7. The method as claimed in at least one of claims 1 to 6, wherein vatting, oxidation and milling are conducted at a temperature between 0 and 100°C.

8. The method as claimed in at least one of claims 1 to 7, wherein the suspension comprises water or a mixture of C₁-C₆ alcohols, N-methylpyrrolidone, toluene and/or nitrobenzene with water.

9. The method as claimed in at least one of claims 1 to 8, wherein auxiliaries from the group consisting of surfactants, pigmentary and nonpigmentary dispersants, fillers, standardizers, resins, waxes, defoamers, antidust agents, extenders, shading colorants, preservatives, drying retardants, rheology control additives, wetting agents, antioxidants, UV absorbers, light stabilizers or a combination thereof are used.

10. The method as claimed in at least one of claims 1 to 9, wherein the leuco compound formed during vatting is milled in the form of its salt or in the form of its acid.

## Revendications

1. Procédé de préparation de pigments organiques réductibles, **caractérisé en ce qu'**on réduit une suspension aqueuse ou aqueuse-organique d'un pigment brut à grosse granulométrie, et on l'oxyde de nouveau, et, sous l'action d'éléments broyeurs ayant un diamètre inférieur ou égal à 0,9 mm, on broie la suspension pigmentaire, pendant la réduction et/ou pendant l'oxydation à l'aide d'un broyeur à micro-éléments, qui est exploité avec une densité de puissance supérieure à 1,0 kW par litre d'espace de broyage, avec une vitesse périphérique de l'agitateur supérieure à 12 m/s.

2. Procédé selon la revendication 1, **caractérisé en ce que** les pigments organiques réductibles sont des pigments d'indanthrone, d'anthanthrone, de thioindigo, de périnone ou de pérylène.

3. Procédé selon la revendication 1 ou 2, **caractérisé en ce que** le pigment organique réductible est le C.I. Pigment Blue 60, 66, le C.I. Pigment Red 88, 168, 123, 149, 178, 179, 181, 189, 194, le C.I. Vat Red 14, 41, le C.I. Pigment Orange 43, le C.I. Pigment Violet 29, le C.I. Pigment Black 31 ou 32, ou un mélange ou un cristal mixte de ceux-ci.

4. Procédé selon au moins l'une des revendications 1 à 3, **caractérisé en ce que** la réduction a lieu avec du dithionite de sodium ou de potassium.

5. Procédé selon au moins l'une des revendications 1 à 4, **caractérisé en ce que** la concentration du pigment dans la suspension est de 2,5 à 40 % en poids par rapport au poids total de la suspension.

6. Procédé selon au moins l'une des revendications 1 à 5, **caractérisé en ce que** la durée du broyage est de 3 à 60 minutes.

7. Procédé selon au moins l'une des revendications 1 à 6, **caractérisé en ce que** la réduction, l'oxydation et le broyage sont effectués à une température de 0 à 100°C.

8. Procédé selon au moins l'une des revendications 1 à 7, **caractérisé en ce que** la suspension contient de l'eau ou un mélange d'alcools en C₁-C₆, de N-méthyl-pyrrolidone, de toluène et/ou de nitrobenzène avec de l'eau.

9. Procédé selon au moins l'une des revendications 1 à 8, **caractérisé en ce qu'**on utilise des adjuvants choisis dans l'ensemble des tensioactifs, des dispersants pigmentaires et non pigmentaires, des matières de charge, des agents thixotropiques, des résines, des cires, des antimousses, des agents anti-poussière, des diluants, des colorants pour nuançage, des conservateurs, des régulateurs de séchage, des additifs régulateurs de rhéologie, des mouillants, des antioxydants, des absorbants UV, des photostabilisants, ou d'une combinaison de ceux-ci.

10. Procédé selon au moins l'une des revendications 1 à 9, **caractérisé en ce que** le composé leucodérivé obtenu lors de la réduction est broyé sous forme de son sel ou sous forme de son acide.
